# EUROPEAN PATENT SPECIFICATION

(11) **EP 2 357 029 B1**
(45) Date of publication and mention of the grant of the patent: **14.11.2012**
(21) Application number: 11154357.5
(22) Date of filing: 14.02.2011
(51) Int. Cl.: B01D 29/90, B01D 29/11

(54) **Self cleaning filter module**
Selbstreinigender Filtermodul
Module de filtre autonettoyant

(30) Priority: 12.02.2010 IT BL20100004
(43) Date of publication of application: 17.08.2011
(73) Proprietor: Sati S.r.l., 47023 San Carlo di Cesena (FC) (IT)
(72) Inventor: Cendron, Nicola, 47023 San Carlo di Cesena FC (IT)
(74) Representative: Bonvicini, Davide

(56) References cited:
- DE-A1- 3 643 670
- DE-A1-102004 014 398
- GB-A- 2 088 235
- US-A- 4 966 701
- US-A- 6 155 430

## Description

The present invention relates to a novel, simplified construction of the inner part of a self-cleaning filter module, of the type that is typically used for separation of the impurities in a liquid flowing though a pipe.

Various forms of filter modules are known, which are used to separate impurities in a liquid flowing through a pipe, by causing such liquid to pass through an inner filter element thereof, which filter element usually consists of a membrane or net that retains impurities on its surface, to only allow flow or delivery of liquid or fluid cleaned from impurities, at least from those impurities whose diameter or size does not allow them to pass through the meshes of the filtering membrane or net.

These retained impurities will build up on the bottom and the inner surface of the filter element and gradually block the flow of fluid therethrough, whereby periodic cleaning or regeneration thereof is required.

Until some time ago, such regeneration required the flow, e.g. the water flow, to be stopped, for the filter element to be removed and rinsed and be later relocated in the network, and this involved the inconvenience of stopped delivery to users downstream from the filter.

Such inconvenience was partially limited by the technique disclosed in patents US 4,966,701 dated 1989 and US 5,076,942 dated 1990, whereby the liquid to be filtered is introduced into a throat, as it enters one of these filter modules, which will increase its pressure as it flows through said module, and will cause most if its impurities to deposit on its movable bottom, thereby limiting clogging of the network or the filtering membrane, whereas the accumulated dirt is allowed to be removed by axial displacement of such movable bottom.

Nevertheless, even in this solution, not all the impurities deposit on the bottom, and some adhere to the inner walls of the filter element, which will become gradually clogged, and require periodic cleaning and regeneration, with stopped delivery of liquid to the network, although less frequently than in the prior art.

Other methods for cleaning or regenerating the surfaces of the filter elements are known, for instance based on periodic suction of the fouled surface, using suction nozzles capable of roto-translational motion to reach the entire surface to be cleaned.

Other regeneration systems include a plurality of detergent ejection nozzles, fixedly arranged within the filter element to be cleaned.

These known filter cleaning and regeneration systems have the drawback of highly complex structure and operation, and of also requiring total and long-time stoppage of liquid delivery in the network, during such cleaning and regeneration operations.

Another drawback of these known regeneration systems is the frequent rupture of the membrane or net, due to excessive pressure of the fluid used for cleaning, or to excessive negative pressure of the ejection nozzles or possibly due to any oscillation or vibration of the roto-reciprocating cleaning elements on the inner surface of said filtering membranes or nets.

Operation and maintenance improvements over these drawbacks have been achieved by the implementation of the method as disclosed in patent MI2007A1357, whereby a filter module comprises a pre-filtering chamber which is adapted to receive the fluid to be filtered from a pipe, such module being equipped with a filter element that at least partially delimits said pre-filtering chamber, and characterized in that it comprises a feeding chamber located upstream from the pre-filtering chamber, with an access door connecting the feeding chamber to the pre-filtering chamber, with at least one nozzle for connecting the feeding chamber to the pre-filtering chamber, and with a first movable closing member for closing the access door, fluid flowing through said at least one nozzle when the closing member closes the access door, thereby ensuring self-cleaning of the filtering net, and further reducing network flow stoppage times.

Nevertheless, the practical implementation of this method has been found to require a further improved function of said filter module, as well as simpler manufacture, maintenance and ordinary operation.

Therefore, the main scope of the present invention is to provide a filter module that, while ensuring substantially continuous delivery of the filtered liquid even during regeneration or cleaning of the filter element, has a simpler structure, due to the omission of spray nozzles and hence any clogging thereof.

Within this scope, another important object of the invention is to provide a filter module that, by its simplified and improved structure, allows the rinsing liquid to exert a uniform pressure over a considerable portion of the height and inner surface of the filter element.

Another important object of the present invention is to provide a filter module that, by its simplified and improved structure, can be easily mounted to the pipe with the liquid to be filtered, and also affords a reduction of mounting and maintenance costs and times.

These and other objects are fulfilled by a self-cleaning filter module as defined in claim 1.

An improved understanding of the present device and a better explanation of how the above objects are fulfilled are described and shown in greater detail below, by reference to a merely illustrative and non-limiting embodiment, and with the help of 6 diagrammatic figures annexed herewith, in which:

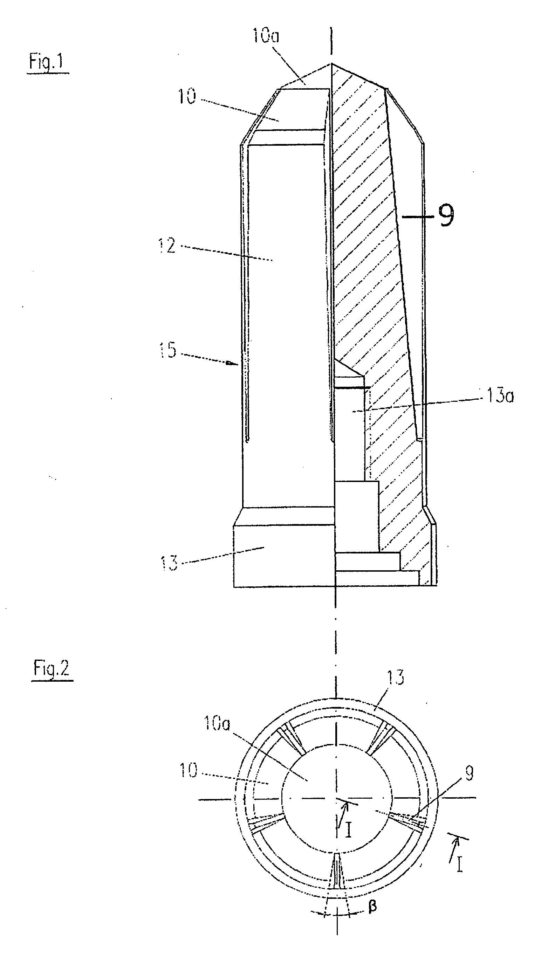

- Fig. 1 is a vertical view of a closing member for use in a filter module of the present invention, as shown in partial section along the plane I-I of Fig. 2;
- Fig. 2 is a plan view of the same closing member as shown in Fig. 1;
- Fig. 3 is a plan view similar to Fig. 2, of the same closing member coaxially mounted in the module of the present invention, in a merely illustrative cross section;
- Fig. 4 is a vertical view in partial axial section of the filter module of the present invention, with the movable closing member of Fig. 1 disposed in its intermediate open state, for normal flow of the liquid to be filtered and discharge of the unfiltered part for recovery;
- Fig. 5 is a vertical view in partial axial section of the present filter module, similar to the view of Fig. 4, said module being shown with the closing member in its fully lowered position, and in its state of normal filtering and outflow of the filtered liquid, any discharge of the unfiltered residue being blocked;
- Fig. 6 is a vertical view in partial axial section of the same module as shown in Figs. 4 and 5, with the closing member in its fully lifted position, for cutting off normal flow of the liquid to be filtered and actuating self-cleaning of its filter element, with discharge of the impurities removed from said filter element.

In the exemplary embodiment as shown in the above mentioned figures, the present filter module M is located downstream from an inlet pipe 22 that carries a liquid to be filtered, and upstream from a delivery pipe 23 for delivering the filtered liquid.

The inlet pipe 22 is connected, through the sleeve 22a, preferably coaxially, to the container 1 of the module M, whose centering head 17 is joined to the cover of the same container 1 and has a feeding chamber 8 with a lower frusto-conical opening 5, preferably coaxial with the container 1.

A ring nut 17a is mounted to the bottom end of the head 17 and, by means of appropriate seals 17b, can hold and isolate the upper edge of a concentric filter element 3.

The opposite edge of the filter element 3 is also held and isolated by a ring nut 18a and seals 18b, which ring nut 18a is joined to a centering base 18 and is mounted in concentric relation to the removable bottom 18c of the container 1. Such removable bottom 18c allows bottom opening of the container 1 of the module M for removal of the filter element 3 and the other parts of the module M, as explained below.

The lower centering base 18 also has a discharge chamber 7, preferably coaxial, which both allows the passage of the center shaft 20, as shown below, and ensures outflow of the unfiltered liquid and its impurities retained by the filter element 3. Said discharge chamber 7, may return the unfiltered liquid through the downstream recovery pipe 40 to the inlet pipe 22 for new filtering, or may convey the collected impurities directly to the drain.

The inner volume of the container 1 is divided into a cylindrical part 4a, which is internal to the net or membrane of the filter element 3 and defines a filter chamber, and an external cylindrical section 4b, which is interposed between said net 3 and the inner surface of the container 1 and defines a delivery chamber. The filtering chamber 4a and the delivery chamber 4b communicate through the filter element 3 only.

The filter module M comprises a movable closing member 15, which is disposed in the filtering chamber 4a and has a frusto-conical closing portion 10, preferably with a taper mating with the taper of the frusto-conical opening 5 at the base of the feeding chamber 8 and a cylindrical body 12.

The closing member 15 also has a plurality of grooves 9, each extending along the frusto-conical portion 10 and at least a portion of the cylindrical body 12, said closing member 5 being movable between a closed position and an open position. Advantageously, the grooves 9 extend substantially all along the portion of the cylindrical body 12 or anyway along such a portion as to reach the end of the filter element 3 opposite to the inlet end that receives the liquid flowing into the filtering chamber 4a.

In one embodiment, the grooves 9 are circumferentially arranged at a preset angular distance along the surface of the frusto-conical portion 10 and the portion of the cylindrical body 12.

In the closed position, the frusto-conical closing portion 10 abuts against the frusto-conical feeding opening 5 to partially close said feeding opening 5, said grooves 9 forming, in the frusto-conical closing portion 10, corresponding liquid flow slits 9a, so as to constrict, by throttling, the passage of the liquid to be filtered through the slits 9a and to generate, in the filtering chamber 4a, a liquid flow which has a greater pressure than the liquid in the feeding chamber 8 and which is directed by the grooves 9 towards a portion of the filter element 3 extending to a length substantially equal to the length of the groove 9 in the filtering chamber 4a.

In the open position, the frusto-conical closing portion 10 is disengaged from the frusto-conical feeding opening 5 and the liquid may freely flow from the feeding chamber 8 to the filtering chamber 4a.

Hence, in the embodiment of the figures, the cylindrical body 12 has an upper frusto-conical end 10, advantageously having a nose cone head 10a and a flat base 13. Such base 13 of the movable closing member 15 has a number of concentric recesses, which can receive devices for adjusting and controlling the closing member 15, particularly including a threaded end recess 13a for screw engagement of one end of the shaft 20, whose opposite end is associated with an actuator 21 which allows a preset axial translation thereof, thereby driving the movable closing member 15 into said translation.

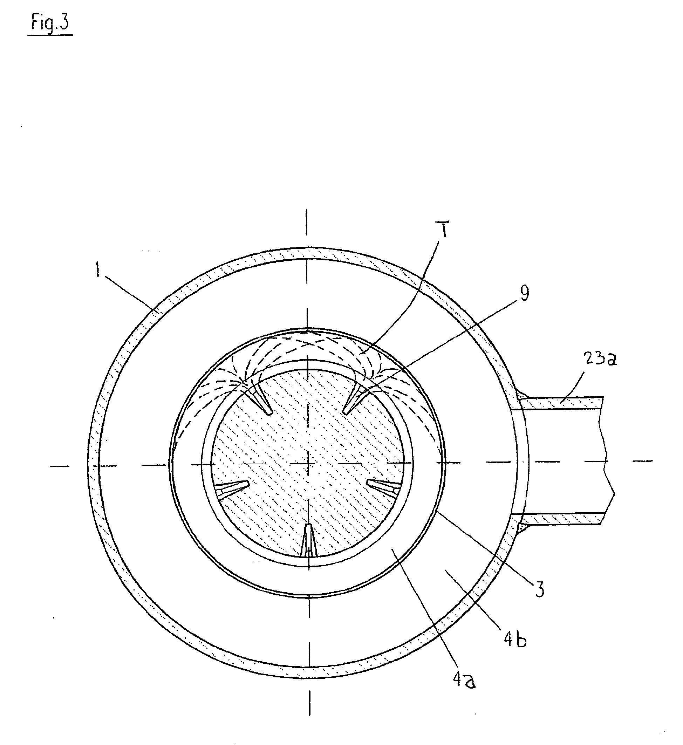

In accordance with one embodiment, the grooves 9 have a gradually decreasing depth from the smaller base of the frusto-conical portion 10 to substantially the base of the cylindrical body 12, while maintaining a constant inclination β of their longitudinal walls. It shall be understood for clarity that the depth of the groove is intended to be measured transverse to its longitudinal extension, between the outer surfaces of the frusto-conical closing portion 10 and the cylindrical body 12 respectively and the deepest point of the groove. Based on the above description and illustrations, the operation of the filter module of the present invention will be summarized below, particularly with reference to Figs. 3 - 4 - 5 and 6. The filter element 3 and/or the movable closing member 15 may be mounted or replaced, after separating the base 18c to remove the container 1, obviously after stopping the outflow of liquid from the inlet pipe 22.

The movable closing member 15 is also associated in a stable and removable manner with its shaft 20, for adjustable mounting thereof with respect to the closing and opening abutments of its frusto-conical portion 10 against the frusto-conical opening 5 of the feeding chamber 8. as well as with respect to the closed and open state of the discharge opening 7 obtained with the bottom 13 of the movable member 15.

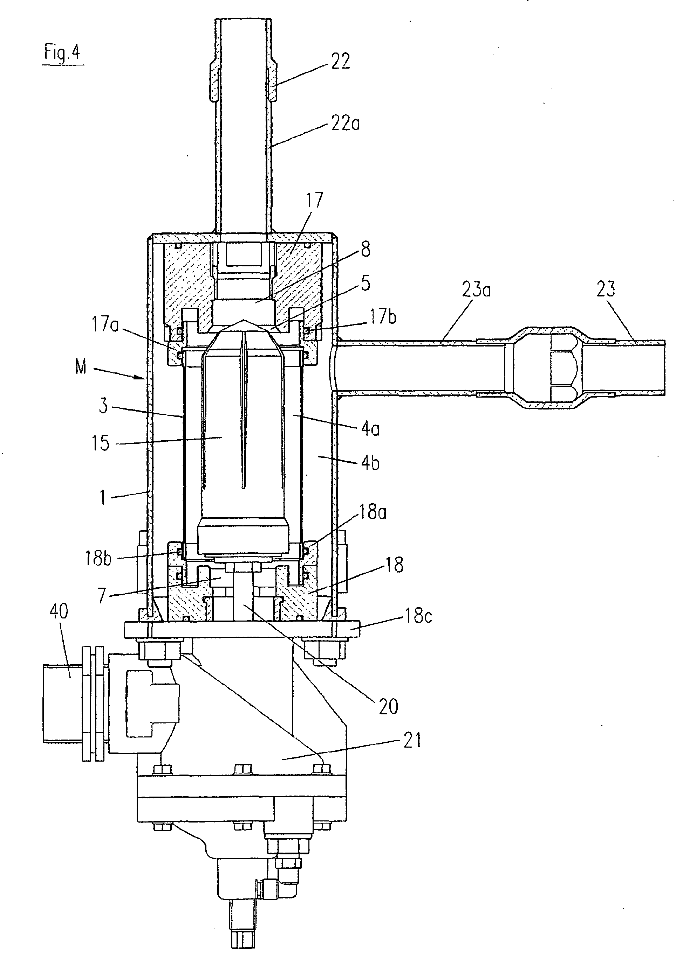

Particularly referring to Fig. 4, the self-cleaning filter module M of the present invention is interposed between an inlet pipe 22, that carries liquid to be purified, and a delivery pipe 23 that carries the purified or filtered liquid, ready for delivery, the module M being shown in a normal operating condition for a given type of fluid to be filtered. In this condition, the movable closing member 15 is disposed in an intermediate axial position of the filtering chamber 4a, so that both the feeding chamber 8 and the discharge chamber 7 are open. Here, the presence of the frusto-conical closing portion 10 of the closing member 15 causes, at the frusto-conical feeding opening 5 of the feeding chamber 8 where the groove 9 forms, in the frusto-conical closing portion 10, corresponding liquid flow slits 9a, a throttling of the flow liquid thereby increasing the pressure of such liquid in the filtering chamber 4a as compared with the pressure in the feeding chamber 8, whereas the small distance between the base 13 and the opening of the discharge chamber 7 only allows partial outflow of the unfiltered liquid to the recovery pipe 40 which bypasses such liquid into the inlet pipe 22.

As mentioned above, the position of the closing member 15 in terms of greater or smaller opening of the feeding chamber 8 and the discharge chamber 7 may be adjusted by means of mechanical arrangements held in the seats 13a of the base 13, with the stroke being controlled by the actuator 21.

Such stroke has the purpose of defining a proper negative pressure between the inner filtering chamber 4a and the outer delivery chamber 4b of the container 1, also in response to the expected consistency of the impurities to be filtered, so that once the liquid from the inlet pipe 22, has flown through the net or membrane of the filter element 3 with an adequate pressure, it may gradually fill the delivery chamber 4b to reach the level of the delivery pipe 23 for normal operation.

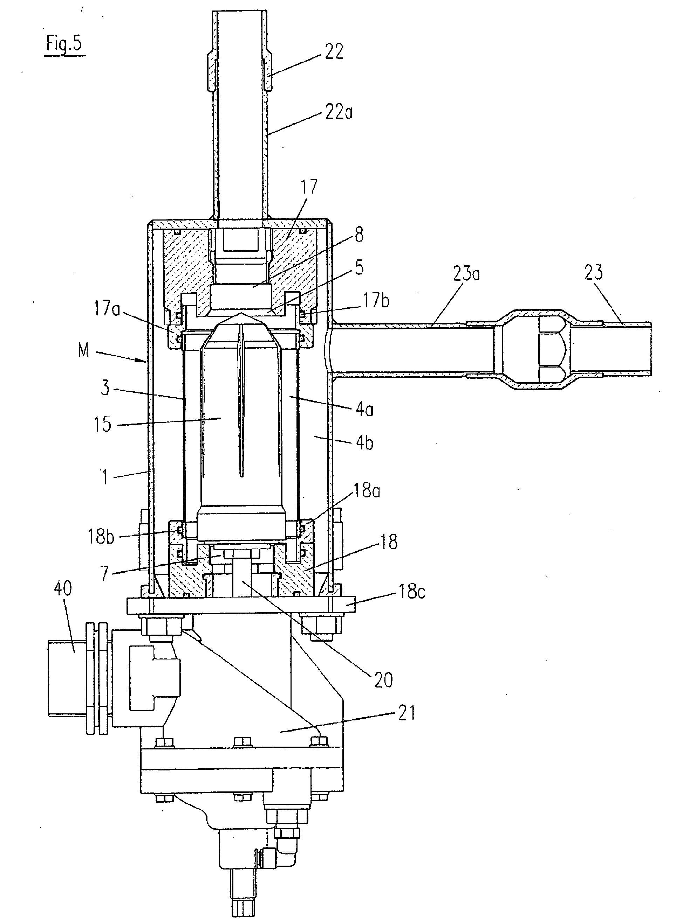

If the liquid to be filtered is already sufficiently clean, normal operation of the present module may be, for instance, as shown in Fig. 5, where the closing member 15 is fully lowered and its base 13 prevents any discharge of the unfiltered liquid, and forces it to flow through the filter element 3. The lower throttling pressure at the outlet of the feeding chamber 8 is balanced by the greater amount of liquid engaged through the filter element 3, which ensures deposit of its smaller number of impurities on the same filter element 3, before reaching the delivery chamber 4b and the delivery pipe 23.

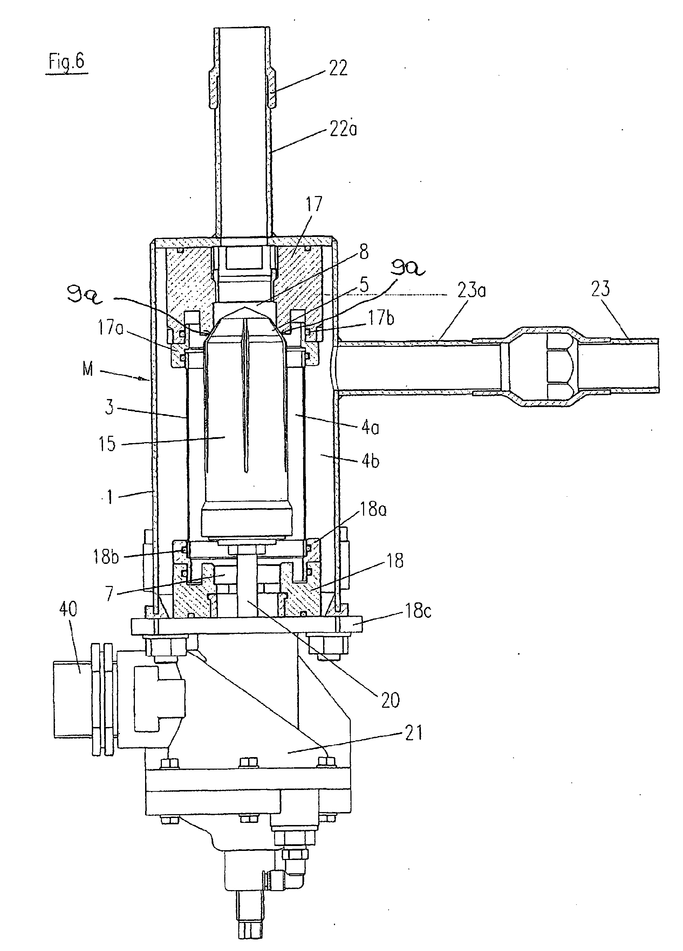

Referring to Figs. 3 and 6, the module is shown during self-cleaning of the filter element 3, when the fouled condition of the filter element 3 requires the start of a self-cleaning of regeneration step, without removal of the filter element 3 to be cleaned, and with further omission of the complex and cloggable nozzles of the prior art.

Self-cleaning of the filter element 3 is started when the closing member 15 is lifted with its frusto-conical portion 10 abutting against the frusto-conical opening 5 of the feeding chamber 8, thereby substantially blocking the flow of the liquid to be purified from the inlet pipe 22, as shown in Fig. 6. Nevertheless, the presence of the series of slits 9a allows a part of the liquid in the feeding chamber 8 to flow into the filtering chamber 4a but, due to the small section of each slit 9a as compared with the section of the feeding opening 5, the pressure of such liquid increases, also due to the flare β of the longitudinal walls of each groove 9 and hence of each slit 9a. Such pressure causes a whirl T of liquid which exerts a strong force on a large area of the contiguous filter element 3, thereby ensuring that each groove 9 can clean a sector of the filter element 3, advantageously having the same angular width and overlapping the sector cleaned by the contiguous groove 9, for full cleaning over the entire circumference of the same filter element 3, as exemplified in Fig. 3. Concerning this particular aspect, it shall be noted that, as mentioned above, in one embodiment, the grooves 9 are circumferentially arranged at a preset angular distance along the surface of the frusto-conical portion 10 and the portion of the cylindrical body 12. Particularly, the angular distance between two adjacent grooves 9 is selected in view of optimizing the cleaning action over the circumference of the filter element 3.

As clearly shown in the above description, the filter module of the present invention fulfills the needs and obviates prior art drawbacks as set out in the introduction of this disclosure.

Particularly, the arrangement of each groove 9 over a portion of the cylindrical body 12 of the closing member 15 ensures a cleaning action on each sector of the filter element 3 to a length corresponding to the length of the groove, whereas the gradual decrease of the depth of each groove 9 ensures constant pressure all along the height of the filter element 3, also far from the feeding opening 5 of the feeding chamber 8, which affords fast and perfect cleaning of the entire inner surface of the filter element 3, even without completely stopping the flow, thereby fulfilling the main object as set out above.

In the embodiment in which each groove 9 extends over substantially the whole cylindrical body portion 12 of the closing member 15, a cleaning action is ensured on each sector of the filter element 3, throughout its length. The gradual change of depth of each groove 9 affords perfect cleaning even in the points of the filter element 3 far from the feeding opening 5, and particularly avoids the use of prior art nozzles.

Furthermore, the omission of these nozzles and the utmost simplification of the structure of the module, affords both improved operation and simpler mounting and/or maintenance.

The construction embodiment as described and illustrated herein shall be of course intended as merely illustrative and without limitation.

## Claims

1. A self-cleaning filter module (M) comprising:
- a feeding chamber (8) for receiving a liquid to be filtered, which has a frusto-conical feeding opening (5) for feeding the received liquid to be filtered,
- a filtering chamber (4a) in fluid communication with said feeding chamber (8) through said feeding opening (5) to receive said liquid to be filtered, said filtering chamber having a filter element (3),
- a delivery chamber (4b) in fluid communication with said filtering chamber (4a) to receive the liquid filtered by said filter element (3),
- a closing member (15) disposed in said filtering chamber (4a) and having a cylindrical body (12), a frusto-conical closing portion (10) and a plurality of grooves (9), each groove extending along the frusto-conical portion (10) and at least a portion of the cylindrical body (12), said closing member (15) being movable between a closed position and an open position, wherein:
in said closed position, the frusto-conical closing portion (10) abuts against the frusto-conical feeding opening (5) to partially close said feeding opening (5), said grooves (9) forming, in the frusto-conical closing portion (10), corresponding liquid flow slits (9a), so as to constrict, by throttling, the passage of the liquid to be filtered through the slits (9a) and to generate, in the filtering chamber (4a), a liquid flow which has a greater pressure than the liquid in the feeding chamber (8) and which is directed by the grooves (9) towards a portion of the filter element (3) extending to a length substantially equal to the length of the groove (9) in the filtering chamber (4a),
in said open position, the frusto-conical closing portion (10) is disengaged from the fiusto-conical feeding opening (5).

2. A self-cleaning filter module (M) as claimed in claim 1, wherein the filter element (3) is housed in a container (1), said container has a centering head (17) joined to the cover of said container (1), a ring nut (17a) is mounted to said centering head (17) and, by means of seals (17b), is adapted to hold and isolate the upper edge of the filter element (3).

3. A self-cleaning filter module (M) as claimed in claim 2, wherein the opposite edge of the filter element (3) is held and isolated by a ring nut (18a) and seals (18b), said ring nut (18a) is joined to a centering base (18) and is mounted in concentric relation to the removable bottom (18c) of the container (1).

4. A self-cleaning filter module (M) as claimed in claim 3, wherein said removable bottom (18c) allows bottom opening of the container (1) of the self-cleaning filter module (M) for removal of the filter element (3) and the other parts of the same module (M).

5. A self-cleaning filter module (M) as claimed in claim 3 or 4, wherein the lower centering base (18) has a discharge chamber (7) for outflow of the unfiltered liquid and its impurities retained by the filter element (3), said discharge chamber (7) being able to convey the unfiltered liquid, through the downstream recovery pipe (40), to the inlet pipe (22) for new filtering, or being able to convey the collected impurities directly to a drain.

6. A self-cleaning filter module (M) as claimed in any claim from I to 5, wherein said frusto-conical closing portion (10) has a taper mating the taper of the frusto-conical opening (5) of the feeding chamber (8).

7. A self-cleaning filter module (M) as claimed in any claim from 1 to 6, wherein the grooves (9) extend substantially all along the cylindrical body (12) of the movable closing member (15), from the smaller base of the frusto-conical closing portion (10) to substantially the base of the cylindrical body (12), and have a gradually decreasing depth, while maintaining a constant inclination (β) of its longitudinal walls.

8. A self-cleaning filter module (M) as claimed in any claim from 1 to 7, wherein the grooves (9) extend along such a portion of the cylindrical body (12) as to reach the end of the filter element (3) opposite to the inlet end that receives the liquid flowing into the filtering chamber (4a).

9. A self-cleaning filter module (M) as claimed in any claim from 1 to 8, wherein the grooves (9) are circumferentially arranged at a predetermined angular distance along the surface of the fimsto-conical closing portion (10) and the cylindrical body portion (12), said angular distance being selected for the liquid flow directed by each groove (9) to the filter element (3) to clean a sector of the filter element (3), which has the same angular width and overlaps the sector cleaned by the adjacent groove (9).

10. A self-cleaning filter module (M) as claimed in any claim from 1 to 9, wherein said closing member (15) is movable through a plurality of intermediate positions between the closed position and the open position.

## Patentansprüche

1. Selbstreinigendes Filtermodul (M), umfassend:
- eine Zuführkammer (8) zum Aufnehmen einer zu filternden Flüssigkeit, welche eine kegelstumpfförmige Zufuhröffnung (5) zum Zuführen der aufgenommenen zu filternden Flüssigkeit aufweist,
- eine Filtrierkammer (4a), die mit der Zuführkammer (8) durch die Zufuhröffnung (5) in Fluidkommunikation steht, um die zu filternde Flüssigkeit aufzunehmen, wobei die Filtrierkammer ein Filterelement (3) aufweist,
- eine Austragskammer (4b), die mit der Filtrierkammer (4a) in Fluidkommunikation steht, um die durch das Filterelement (3) gefilterte Flüssigkeit aufzunehmen,
- ein Verschlußglied (15), das in der Filtrierkammer (4a) angeordnet ist und einen zylindrischen Körper (12), einen kegelstumpfförmigen Verschlußabschnitt (10) und mehrere Rillen (9) aufweist, wobei sich jede Rille den kegelstumpfförmigen Abschnitt (10) und mindestens einen Abschnitt des zylindrischen Körpers (12) entlang erstreckt, wobei das Verschlußglied (5) zwischen einer geschlossenen Position und einer offenen Position bewegbar ist, wobei:
in der geschlossenen Position der kegelstumpfförmige Verschlußabschnitt (10) an der kegelstumpfförmigen Zufuhröffnung (5) anliegt, um die Zufuhröffnung (5) teilweise zu verschließen, wobei die Rillen (9) in dem kegelstumpfförmigen Verschlußabschnitt (10) entsprechende Flüssigkeitsstromschlitze (9a) bilden, um durch Drosseln den Durchtritt der zu filternden Flüssigkeit durch die Schlitze (9a) zu verengen und um in der Filtrierkammer (4a) einen Flüssigkeitsstrom zu erzeugen, der einen größeren Druck als die Flüssigkeit in der Zuführkammer (8) aufweist und der durch die Rillen (9) zu einem Abschnitt des Filterelements (3) hin gelenkt wird, der sich über eine Länge erstreckt, die im wesentlichen gleich der Länge der Rille (9) in der Filtrierkammer (4a) ist,
in der offenen Position der kegelstumpfförmige Verschlußabschnitt (10) nicht mit der kegelstumpfförmigen Zufuhröffnung (5) in Kontakt steht.

2. Selbstreinigendes Filtermodul (M) nach Anspruch 1, wobei das Filterelement (3) in einem Behälter (1) untergebracht ist, wobei der Behälter einen Zentrierkopf (17) aufweist, der mit der Abdeckung des Behälters (1) zusammengefügt ist, wobei an dem Zentrierkopf (17) eine Ringmutter (17a) angebracht ist und mittels Dichtungen (17b) dazu ausgelegt ist, die obere Kante des Filterelements (3) zu halten und zu isolieren.

3. Selbstreinigendes Filtermodul (M) nach Anspruch 2, wobei die entgegengesetzte Kante des Filterelements (3) durch eine Ringmutter (18a) und Dichtungen (18b) gehalten und isoliert wird, wobei die Ringmutter (18a) mit einer Zentrierbasis (18) zusammengefügt ist und in konzentrischer Beziehung zu dem entfernbaren Boden (18c) des Behälters (1) angebracht ist.

4. Selbstreinigendes Filtermodul (M) nach Anspruch 3, wobei der entfernbare Boden (18c) das Öffnen der Unterseite des Behälters (1) des selbstreinigenden Filtermoduls (M) zum Entnehmen des Filterelements (3) und der anderen Teile desselben Moduls (M) ermöglicht.

5. Selbstreinigendes Filtermodul (M) nach Anspruch 3 oder 4, wobei die untere Zentrierbasis (18) eine Abgabekammer (7) für das Ausströmen der ungefilterten Flüssigkeit und ihrer Verunreinigungen, welche durch das Filterelement (3) zurückgehalten werden, aufweist, wobei die Abgabekammer (7) in der Lage ist, die ungefilterte Flüssigkeit durch das nachgelagerte Rückgewinnungsrohr (40) zu dem Einlaßrohr (22) zur erneuten Filtrierung zu transportieren, oder in der Lage ist, die eingesammelten Verunreinigungen direkt zu einem Abfluss zu befördern.

6. Selbstreinigendes Filtermodul (M) nach einem der Ansprüche 1 bis 5, wobei der kegelstumpfförmige Verschlußabschnitt (10) eine Verjüngung aufweist, welche mit der Verjüngung der kegelstumpfförmigen Öffnung (5) der Zuführkammer (8) zusammenpaßt.

7. Selbstreinigendes Filtermodul (M) nach einem der Ansprüche 1 bis 6, wobei sich die Rillen (9) im wesentlichen zur Gänze den zylindrischen Körper (12) des beweglichen Verschlußglieds (15) entlang erstrecken, von der kleineren Basis des kegelstumpfförmigen Verschlußabschnitts (10) zu im wesentlichen der Basis des zylindrischen Körpers (12), und eine allmählich abnehmende Tiefe aufweisen, wobei sie eine konstante Neigung (β) ihrer Längswände beibehalten.

8. Selbstreinigendes Filtermodul (M) nach einem der Ansprüche 1 bis 7, wobei sich die Rillen (9) einen derartigen Abschnitt des zylindrischen Körpers (12) entlang erstrecken, daß sie bis zu dem Ende des Filterelements (3) reichen, das dem Einlassende entgegengesetzt ist, welches die Flüssigkeit aufnimmt, die in die Filtrierkammer (4a) strömt.

9. Selbstreinigendes Filtermodul (M) nach einem der Ansprüche 1 bis 8, wobei die Rillen (9) in einem vorgegebenen Winkelabstand am Umfang entlang der Oberfläche des kegelstumpfförmigen Verschlußabschnitts (10) und des zylindrischen Körperabschnitts (12) angeordnet sind, wobei der Winkelabstand für den Flüssigkeitsstrom, der durch jede Rille (9) zu dem Filterelement (3) gelenkt wird, gewählt wird, um einen Sektor des Filterelements (3) zu reinigen, der dieselbe Winkelbreite aufweist und den Sektor überlappt, der durch die benachbarte Rille (9) gereinigt wird.

10. Selbstreinigendes Filtermodul (M) nach einem der Ansprüche 1 bis 9, wobei das Verschlußglied (15) durch mehrere Zwischenpositionen zwischen der geschlossenen Position und der offenen Position bewegt werden kann.

## Revendications

1. Module de filtration autonettoyant (M), comprenant:
- une chambre d'alimentation (8) destinée à recevoir un liquide à filtrer, qui présente une ouverture tronconique d'alimentation (5) pour amener le liquide à filtrer reçu,
- une chambre de filtration (4a) qui est en communication fluidique avec ladite chambre d'alimentation (8) par ladite ouverture d'alimentation (5) pour recevoir le liquide à filtrer, ladite chambre de filtration comprenant un élément filtrant (3),
- une chambre de distribution (4b) qui est en communication fluidique avec ladite chambre de filtration (4a) pour recevoir le liquide filtré par ledit élément filtrant (3),
- un organe de fermeture (15) disposé dans ladite chambre de filtration (4a) et présentant un corps cylindrique (12), une portion tronconique de fermeture (10) et une pluralité de rainures (9), chaque rainure s'étendant le long de ladite portion tronconique (10) et d'au moins une portion dudit corps cylindrique (12), ledit organe de fermeture (15) étant déplaçable entre une position fermée et une position ouverte, dans lequel :
dans la position fermée, ladite portion tronconique de fermeture (10) s'applique contre l'ouverture tronconique d'alimentation (5) afin de fermer en partie ladite ouverture d'alimentation (5), lesdites rainures (9) formant, dans la portion tronconique de fermeture (10), des fentes correspondantes de flux de liquide (9a) afin de resserrer par étranglement le passage du liquide à filtrer à travers lesdites fentes (9a) et afin de générer à l'intérieur de ladite chambre de filtration (4a) un flux de liquide qui présente une pression supérieure à celle du liquide dans ladite chambre d'alimentation (8) et qui est dirigé par lesdites rainures (9) vers une portion de l'élément filtrant (3), qui s'étend sur une longueur pour l'essentiel égale à la longueur de la rainure (9) dans la chambre de filtration (4a),
dans la position ouverte, la portion tronconique de fermeture (10) est dégagée de l'ouverture tronconique d'alimentation (5).

2. Module de filtration autonettoyant (M) selon la revendication 1, dans lequel ledit élément filtrant (3) est logé à l'intérieur d'un récipient (1), ledit récipient comprenant une tête de centrage (17) qui est assemblée avec la couverture dudit récipient (1), un écrou à oeil (17a) étant monté sur ladite tête de centrage (17) et étant adapté, au moyen de joints d'étanchéité (17b), à tenir et à isoler le bord supérieur dudit élément filtrant (3).

3. Module de filtration autonettoyant (M) selon la revendication 2, dans lequel le bord opposé de l'élément filtrant (3) est tenu et isolé par un écrou à oeil (18a) et par des joints d'étanchéité (18b), ledit écrou à oeil (18a) étant assemblé avec une base de centrage (18) et étant monté en relation concentrique par rapport au fond amovible (18c) du récipient (1).

4. Module de filtration autonettoyant (M) selon la revendication 3, dans lequel ledit fond amovible (18c) permet d'ouvrir le dessous du récipient (1) du module de filtration autonettoyant (M) pour enlever ledit élément filtrant (3) et les autres parties de ce même module (M).

5. Module de filtration autonettoyant (M) selon la revendication 3 ou 4, dans lequel la base de centrage (18) inférieure comprend une chambre de décharge (7) pour l'écoulement du liquide non filtré et de ses impuretés retenues par ledit élément filtrant (3), ladite chambre de décharge (7) étant apte à transporter le liquide non filtré, à travers le tuyau de récupération (40) situé en aval, vers le tuyau d'entrée (22) pour une nouvelle filtration, ou étant apte à transporter les impuretés recueillies directement vers un déversoir.

6. Module de filtration autonettoyant (M) selon l'une quelconque des revendications 1 à 5, dans lequel ladite portion tronconique de fermeture (10) présente un rétrécissement qui s'ajuste au rétrécissement de l'ouverture tronconique (5) de la chambre d'alimentation (8).

7. Module de filtration autonettoyant (M) selon l'une quelconque des revendications 1 à 6, dans lequel lesdites rainures (9) s'étendent pour l'essentiel tout le long du corps cylindrique (12) de l'organe déplaçable de fermeture (15), depuis la base plus petite de la portion tronconique de fermeture (10) jusqu'à, pour l'essentiel, la base du corps cylindrique (12), et présentent une profondeur diminuant progressivement tout en maintenant une inclinaison (β) constante de leurs parois longitudinales.

8. Module de filtration autonettoyant (M) selon l'une quelconque des revendications 1 à 7, dans lequel lesdites rainures (9) s'étendent le long d'une portion du corps cylindrique (12) telle qu'elles atteignent l'extrémité de l'élément filtrant (3) opposée à l'extrémité d'entrée qui reçoit le liquide s'écoulant dans la chambre de filtration (4a).

9. Module de filtration autonettoyant (M) selon l'une quelconque des revendications 1 à 8, dans lequel lesdites rainures (9) sont disposées circonférentiellement à une distance angulaire prédéterminée suivant la surface de la portion tronconique de fermeture (10) et de la portion de corps cylindrique (12), la distance angulaire étant choisie pour le flux de liquide dirigé par chaque rainure (9) vers ledit élément filtrant (3), de manière à nettoyer un secteur de l'élément filtrant (3) qui présente la même largeur angulaire et recouvre en partie le secteur nettoyé par la rainure (9) adjacente.

10. Module de filtration autonettoyant (M) selon l'une quelconque des revendications 1 à 9, dans lequel ledit organe de fermeture (15) peut passer par une pluralité de positions intermédiaires entre la position fermée et la position ouverte.
